# EUROPEAN PATENT APPLICATION

(11) **EP 1 106 232 A1**
(43) Date of publication of application: **13.06.2001**
(21) Application number: 00126663.4
(22) Date of filing: 05.12.2000
(51) Int. Cl.: B01D 46/52, B01D 46/42, B01D 46/24

(54) **Air filter with sealing collar in two parts**

(30) Priority: 10.12.1999 IT PD990282
(71) Applicant: Virgis Filter S.n.c., 35010 Arsego (IT)
(72) Inventor: Virgis, Camillo, 35010 Arsego (IT)
(74) Representative: Gustorf, Gerhard, Dipl.-Ing.

(57) **Abstract**

The invention is a new air filter constituted by a cylindrical filtering part in pleated paper, a plug made of elastic or rigid material at one and and a connection ring at the other end, wherein the connection ring comprises two parts, one of which is made of expanded elastic material and envelops the edge of the filtering paper cylinder, while the other one is a ring in metallic and/or rigid plastic material that envelops said first part in expanded elastic material.
The inner surface of the ring in rigid material is provided with a protrusion that prevents said rigid ring from coming off the expanded elastic part of the connection ring. The ring in metallic and/or rigid plastic material may be incorporated in the connection ring.

## Description

The invention concerns air filters and in particular it concerns paper radial filters.

Paper air filters comprise a cylindrical filtering element made of pleated paper, gaskets and connection elements.

In radial or cylindrical filters the filtering paper is arranged in such a way as to form a cylinder; one of the two ends is closed by a sealing plug made of elastic material, while the other end is provided with a ring made of elastic material for the connection with the air suction pipe.

There are filters on the market, whose tightness on the suction pipe is due to the material of which the ring for the connection with the suction pipe is made. The result obtained by these filters cannot be fully satisfying, since the same material has two different functions: radial mechanical seal, for which a rigid material is required, and hermetic seal, for which a soft material is required. Therefore, for the connection with the suction pipe it has been necessary to adopt longer rings, in such a way as to compensate for the insufficient sealing effect by providing a larger adhesion surface, without increasing tightness significantly.

There are filters provided with two wire nets positioned on the internal and external cylindrical surface of the filtering paper. These wire nets, besides resisting to mechanical stresses, require an increase in the thickness of the ring for the connection with the suction pipe, and consequently it is necessary to use much more material. Furthermore, the presence of the wire net involves the costs connected with its purchase and processing and the internal radial seal of the cylinder constituted by the filtering means makes it necessary to increase the diameter of the filter.

In order to overcome all the drawbacks described above, a new type of cylindrical air filter made of paper has been designed and implemented, wherein the ring used for the connection with the suction pipe is made of two materials.

A new material, much more elastic, expanded, lighter and cheaper has been adopted, and this is held in position by a ring made of a rigid material.

In practice, the connection ring with the suction pipe is constituted by two parts made of two materials with different stiffness/elasticity.

The main part of the connection ring is constituted by the more elastic expanded material, which serves to ensure the suitable adhesion and the insertion of the filter in the suction pipe, besides enveloping the circular edge of the pleated sheet of filtering paper.

The second part made of more rigid material serves to resist the thermal and mechanical expansion of the more elastic part of the ring.

Said second rigid part comprises a ring in metallic material, which can be a flat strip or a net, and/or in rigid plastic material that envelops the elastic part of the connection ring.

The favourite shape of said second rigid part is that of a disc with Z-shaped section, the inside of which is provided with an annular protrusion/protrusions.

The Z-shaped rigid ring ensures the correct pressure of the inner elastic part of the connection ring on the suction pipe, as well as the coupling of the rigid ring with the elastic part; the annular protrusion inside the rigid ring prevents the rigid ring from coming off the elastic part of the connection ring.

According to an equivalent application, the rigid ring may be in the shape of an L or an equivalent shape and incorporate it inside the elastic part during the formation of the latter.

The new filter constituted as described above offers the advantage that it features the elasticity necessary to ensure the dynamic adaptation (thermal and pneumatic) of the connection ring to the suction pipe and also the constant adhesion of the connection ring itself to the suction pipe.

The following is just an example among many of the invention in question, illustrated in the enclosed drawings, wherein:

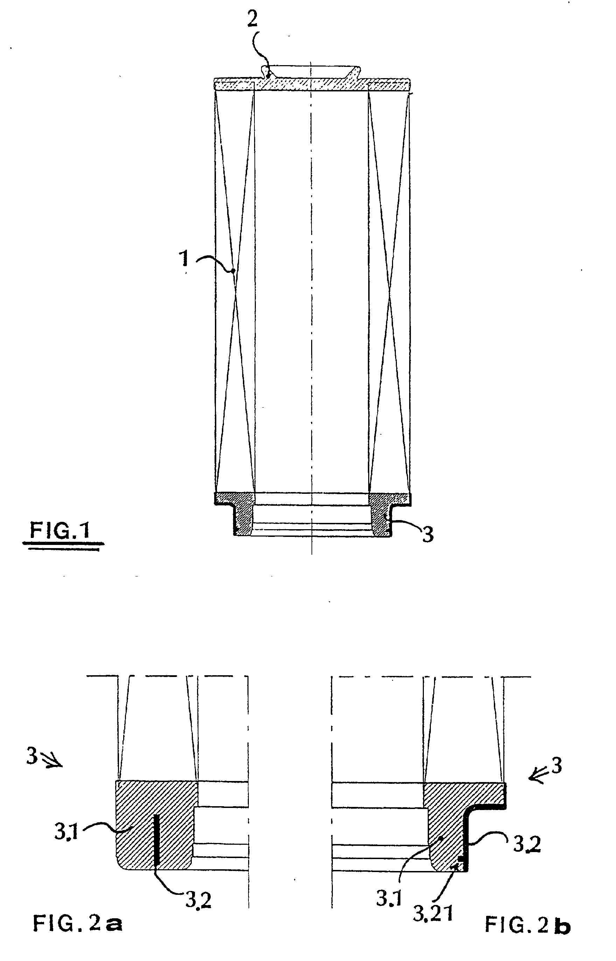

Figure 1 shows a longitudinal section of an implementation of the new filter.
   In this figure it is possible to observe the pleated filtering paper (1), the elastic plug (2) and the connection ring (3) suitable for enveloping the suction pipe.
Figures 2a and 2b show in detail the connection ring (3) in the two variants with rigid ring (3.2) external to the expanded elastic material (3.1) and with rigid ring (3.2) incorporated in the expanded elastic material (3.1).

In this figure it is possible to observe that the connection ring (3) is constituted by a first ring in expanded elastic material (3.1), around which there is a second rigid ring (3.2).

The rigid ring (3.2), in this example, has Z-shaped section, in order to compensate for the difference in thickness between the part in expanded elastic material (3.1) and the pleated filtering paper (2).

The inner surface of the rigid ring (3.2) is provided with an annular protrusion (3.21) in order to prevent the rigid ring (3.2) from coming off the elastic part (3.1) of the connection ring (3).

## Claims

1. Air filter constituted by a cylindrical filtering part made of pleated paper, a plug in elastic or rigid material at one end and a connection ring at the other end, characterized in that said connection ring comprises two parts, one of which is made of expanded elastic material and envelops the edge of the filtering paper cylinder, while the other one is a ring in metallic and/or rigid plastic material that envelops said first part in expanded elastic material.

2. Air filter according to claim 1, characterized in that the inner surface of the ring in rigid material is provided with a protrusion that prevents said rigid ring from coming off the expanded elastic part of the connection ring.

3. Air filter constituted by a cylindrical filtering part made of pleated paper, a plug in elastic or rigid material at one end and a connection ring at the other end, characterized in that said connection ring comprises two parts, one of which is made of expanded elastic material, while the other one is made of metallic and/or rigid plastic material, and wherein the first part incorporates either the edge of the filtering paper cylinder and said second ring made of metallic and/or rigid plastic material.
